Europäisches Patentamt

European Patent Office

Office européen des brevets

(11) Publication number: **0 062 497**
**B1**

(12) **EUROPEAN PATENT SPECIFICATION**

(45) Date of publication of patent specification: **10.07.85**   (51) Int. Cl.⁴: **B 29 D 30/48**

(21) Application number: **82301713.2**

(22) Date of filing: **01.04.82**

(54) **Fillered bead core assembly machine and method of manufacturing a fillered bead core assembly.**

(30) Priority: **02.04.81 US 250159**

(43) Date of publication of application:
**13.10.82 Bulletin 82/41**

(45) Publication of the grant of the patent:
**10.07.85 Bulletin 85/28**

(84) Designated Contracting States:
**DE FR GB IT**

(56) References cited:
**GB-A-1 598 291**
**US-A-2 738 007**
**US-A-3 455 764**
**US-A-4 061 525**
**US-A-4 087 298**
**US-A-4 240 863**

(73) Proprietor: **NATIONAL-STANDARD COMPANY**
**601 North Eighth Street**
**Niles, Michigan 49120 (US)**

(72) Inventor: **Cole, Leon J.**
**3420 Buffalo Road**
**Niles Michigan 49120 (US)**
Inventor: **Mallory, Edwin E.**
**811 Totomee Road**
**Niles Michigan 49120 (US)**
Inventor: **Bourassa, Hugh**
**2597 Kerwick Road**
**University Heights Ohio 44118 (US)**

(74) Representative: **Newby, John Ross et al**
**J.Y. & G.W. Johnson Furnival House 14/18 High Holborn**
**London WC1V 6DE (GB)**

Courier Press, Leamington Spa, England.

## Description

The present invention relates to the manufacture of a fillered bead core assembly and, more particularly, to a machine which permits the continuous assembly of bead filler material to the bead core to form a fillered bead core assembly for subsequent use in a tyre building machine for building vehicle tyres.

In the past, it has been the practice in the formation of fillered bead core assemblies (also known as bead filler rings), that a bead core is positioned on a cylindrical filler applicator and then a length of preformed filler material is drawn onto the filler applicator as the latter is rotated. With the recent requirement for fillered bead core assemblies with much greater cross-sectional heights and uniform fillers for radial tyres and especially radial truck tyres, this method is less than desirable. As the height to thickness ratio of the filler material increases, it is extremely difficult to lay and hold the filler material in a radially upright position on the outer circumference of a bead core. Also, it is difficult to make a splice in the filler material due to the varying degree of stretch which must be put into the filler material from its base, where it rests on the bead core, to its peak or outer circumference.

GB—A—1,598,291 and US—A—4,087,298 disclose apparatus for partially mechanising the production of such fillered bead core assemblies and utilise an inflatable bladder on which, in its deflated state, a length of filler material is manually positioned to form an endless cylindrical band of such material, inflation of the bladder subsequently turning the filler material about the bead core to form the required fillered bead core assembly.

However, the manual placement of the filler material on the deflated bladder is time-consuming and requires great operator skill if distortion of the filler material is not to occur.

This invention relates to an improved machine and method for manufacturing fillered bead core assemblies which although utilising the known-type of inflatable bladder for the turn-up procedure combines the inflatable bladder with extrusion equipment for the filler material so that the continuous output of the extrusion equipment can be fed to the bladder without the need for any manual involvement with the freshly extruded filler material.

What constitutes a machine in accordance with the invention is defined in the following claim 1 and what constitutes the method of the invention is defined in the following claim 8.

The intermittent application of filler material onto successive work stations is made possible by an intermittent stopping of the feeding of the filler material during removal of a completed fillered bead core assembly from a work station and the positioning of successive bead cores thereon. However, it is highly desirable not to start and stop the flow of the filler material from the extruding section of the machine during each removal of a completed fillered bead core assembly and the positioning of a succeeding bead core thereon in order to maintain the bead filler material at a desired and accurate configuration. Accordingly, to permit the continuous discharge of the filler material from the extruding portion, and at the same time to permit the starting and stopping of the flow of the filler material at the first applicator station, it is necessary to interpose an accumulator means between the extruder means and the applicator.

Desirably each work station of the applicator is comprised of a cylindrical drum adapted to receive and hold a bead core while it is positioned in the first applicator position. After the freshly extruded filler material has been placed on the cylindrical drum portion adjacent the bead core, the loaded work station can be rotated to a second forming position for further processing. Simultaneously with the movement of the loaded work station to a second forming position, a second work station having a formed fillered bead core assembly thereon can be rotated back to the first applicator position where the fillered bead core assembly is removed and the cycle is repeated.

In a further embodiment of machine according to the present invention, the operating machine includes four work stations at the applicator which are mounted in a rotatable turret assembly. In such a machine configuration, the cut filler material is automatically formed into a endless strip, then rotated through 90° and is engaged by a positioning plate which automatically positions a bead core adjacent the filler material. The work station is then rotated through a further 90° wherein the forming operation is accomplished and the filler material is turned-up and sealed to the bead core. Next, the work station is rotated another 90° and the formed fillered bead core assembly is removed onto a suitable conveying means. Lastly, the work station is again rotated 90° to the first applicator position to repeat the cycle of operation.

The variations of the present invention provide for an apparatus wherein maximum speed and uniformity is achieved in manufacturing fillered bead core assemblies.

Embodiments of machines in accordance with the invention will now be described, by way of example, with reference to the accompanying drawings, in which:—

Figure 1 is a side elevational view of an entire fillered bead core assembly machine in accordance with the present invention;

Figure 2 is a side elevational view of the two-station filler applicator of the machine shown in Figure 1;

Figure 3 is a plan of the two-station filler applicator shown in Figure 2;

Figure 4 is a fragmentary side elevational view of the end applicator arm portion of the cutting and delivering section of the machine of Figure 1 illustrating the use of a frictionally driven wheel to feed a strip of filler material without distortion

Figure 5 is a plan of a four-station filler applicator for use with a further embodiment of machine in accordance with the present invention;

Figure 6 is a fragmentary end view of the mechanism for automatically applying the filler material onto a work station in the filler applicator;

Figure 7 is a side elevational view of the mechanism shown in Figure 6;

Figure 8 is a fragmentary perspective view of a portion of a dolly mechanism employed in the accumulator section of a machine in accordance with the present invention;

Figure 9 is a fragmentary side elevational view of a cutting mechanism employed in the cutting, measuring and delivering section of a machine in accordance with the present invention;

Figure 10 is a fragmentary front elevational view taken along the lines 10—10 shown in Figure 9;

Figures 11 and 12 are fragmentary front elevational views of the cutting and filler material clamping mechanism showing the positions of the clamping unit employed in a machine in accordance with the present invention;

Figure 13 is a fragmentary side elevational view taken along the lines 13—13 shown in Figure 11; and

Figure 14 is a fragmentary side elevational view taken along the lines 14—14 shown in Figure 12.

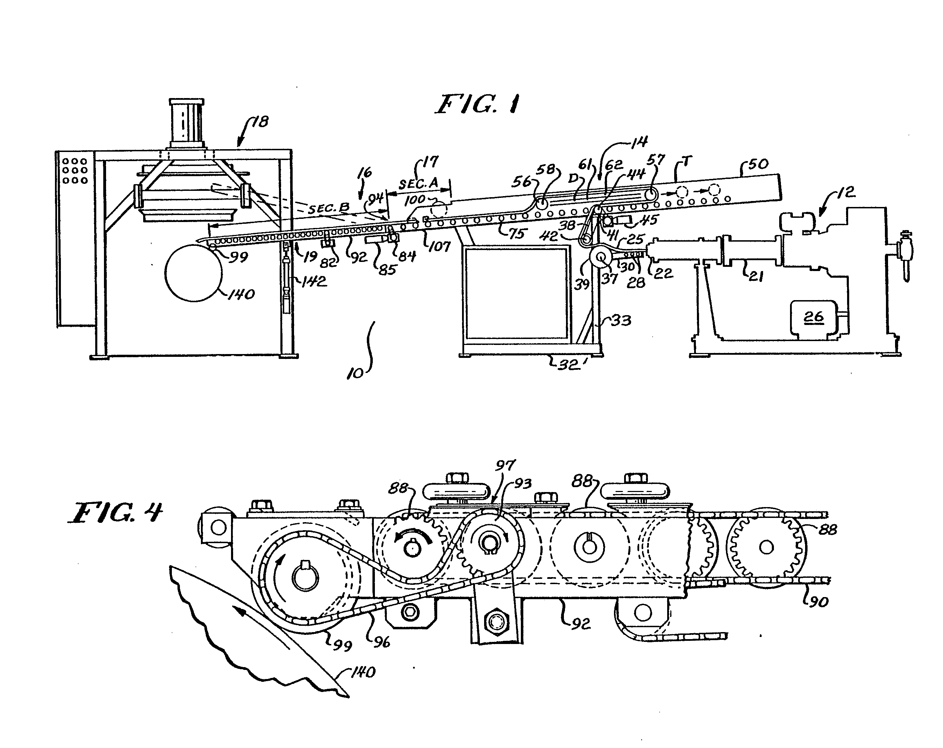

Referring now to the drawings wherein like numerals have been used throughout the several views to designate the same or similar parts, there is schematically shown in Figure 1, a fillered bead core assembly machine 10 which is comprised of essentially four sections or units in sequence:

1) an extruding section 12 of known construction which extrudes the filler material in a continuous endless strip;

2) an intermediate accumulator section 14 which is also of known construction;

3) a cutting, measuring and delivering section 16 comprised of Sec's A and B which measures and cuts the filler material to predetermined lengths and drives the filler material onto the drum stations of the filler applicator; and

4) a multiple work station filler applicator 18 wherein a cut strip of filler material is positioned adjacent to a pre-formed bead core and formed to the bead to provide a fillered bead core assembly 11.

The extruding section 12 is of known construction and includes apparatus which heats, masticates and conveys elastomeric material to a discharging feed screw (not shown) enclosed within a feed tube 21 having a discharge head 22 at its outer end. The filler material issues through a die (not shown) at the head 22 in the form of a continuous strip designated 25. The die is selected to provide a strip of filler material 25 of a desired cross-sectional configuration. The feed screw within the feed tube 21 is driven from any suitable power source such as an electric motor 26. The die at the discharge head 22 is preferably removably mounted so that dies for any desired configuration of filler material may be readily substituted one for the other.

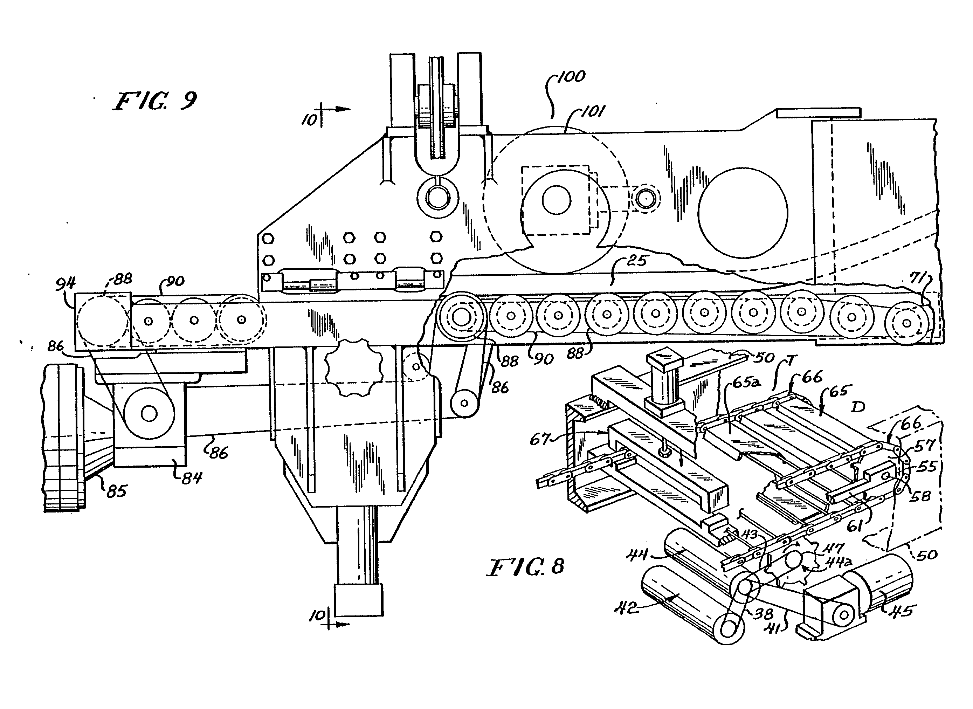

From the discharge head 22, the strip of filler material 25 passes over conveying means comprising a set of rotatable conveyor rollers 28 freely rotatably mounted in juxtaposed relation between cantilever arms 30 projecting from corner legs 33 of a frame 32'. The cantilever arms 30 may be pivoted downwardly to provide easy access for changing a die in the head 22. The rollers 28 are spaced with respect to each other to support the freshly extruded filler material 25 and prevent it from sagging to maintain stable the dimensions and shape of the extruded strip. The platform formed by these rollers 28 is lightly loaded upwardly but can pivot downwardly in response to the weight of the filler material supported thereby. When the platform is pushed downward due to excess filler material, a potentiometer (not shown) sends an electrical signal to a drive motor 45, operatively connected by a linkage 41 to a drive roll 44 to increase the speed thereof. Because sprocket wheels 44a are positively driven together by a linkage 43 (Figure 8), and a roll 42 is driven by a linkage 38, the rolls 42, 44 and the wheels 44a are all driven at the same peripheral speed to transfer the filler material 25 from the extruder head 22 onto accumulator conveyor rolls 75 (Figure 1). Accordingly, an automatic speed control is effected by the linkage 41 coupled to the motor 45 mounted on channel members 50. From a transfer roll 39, the strip of filler material 25 passes under the guide roll 42 secured to the back sides of the vertical frame legs 33. From the guide roll 42, the filler material passes upwardly around and over the top of the drive roll 44, hereinafter described in greater detail. The sprocket wheels 44a are connected by a shaft 47 suitably mounted on the machine frame channel members 50. The electric motor 45, having variable selective speed characteristics, or through a variable speed drive mechanism having selectable speeds, provides a desired speed of rotation of the drive roll 44.

The accumulator section 14 is incorporated into the intermediate frame portion of the conveying means. Thus, according to the embodiment of machine shown in Figure 1, there is extending along the top of the machine 10 a long trackway T of box-like cross-section within which an accumulator dolly means D has a to-and-fro movement. This trackway T of known configuration is formed between the two spaced channel members 50. It will be noted that this trackway has a slight downward inclination from right to left, of approximately 5°, so that gravity will tend to propel the dolly means D downwardly toward the left or rear end of the trackway to where the cutting, measuring and delivering section 16 is positioned. Reference may be made to our US—A—3,455,764 which describes the accumulator means.

Carried by the channel members 50 are dolly wheels 56 and 57, dolly belt 65 and paddles 65a secured adjacent their opposite ends to the webs of the channel members 50. Movable along these rods is a carriage of the dolly means D, comprising the spaced front and rear wheels 56 and 57 having their axles 58 and 59 mounted in bushings 55 which have free sliding engagement with circular guide rods (Figure 8). The bushings 55 are fastened together at fixed fore and aft spacing by side frame stringers 61 of a dolly frame 62. The circular rods extend almost the entire length of the channel members 50 to accommodate a substantial range of to-and-fro longitudinal sliding movement of the dolly means D.

The dolly means D further comprises the endless dolly belt 65 (Figure 8) composed of a ladder chain 66 or other suitable material trained over the dolly means 56 and 57. The dolly belt 65 is wider than the strip of filler material 25, for accommodating the strip of filler material thereon. The dolly belt 65 includes the sheet metal paddles 65a thereon to minimize contact with the extruded rubber material.

Referring again to Figures 1 and 8, it will be seen that on the top of the trackway at a point substantially above the drive sprocket wheels 44a there is provided a brake means 67 of known configuration, which engages the side edges of the endless dolly belt 65 laterally outwardly of the strip 25 on the belt along its top run. When this brake is actuated, the dolly means D starts accumulating filler material 25.

Movement of the dolly means D to the right, for material accumulation, is effected by the drive imparted by the sprocket wheels 44a connected to the rolls 44, 42 and the motor 45. The aforementioned brake means 67 holds the upper run of the dolly belt 65 to provide a reaction point for the driving force of the driving means, defined by the sprocket wheels 44A. Such drive continues to impart movement of the dolly means towards the right as long as the brake means 67 is engaged (clamped). Such movement will continue to accumulate filler material in the accumulator section until the brake means 67 is released, allowing gravity to act or until the right-hand end of the dolly means strikes an end limit switch (not shown) for stopping the extruder of the extruding section 12.

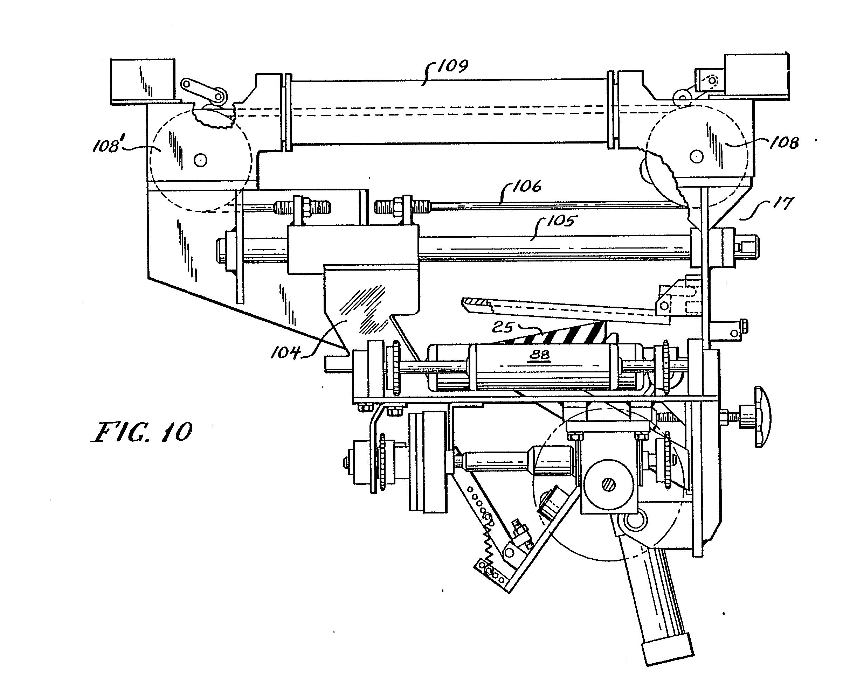

When the dolly means D moves to the right, as shown in Figure 8, the lower run of the filler material, unless supported, may tend to sag down, objectionably altering the desired predetermined dimensions thereof. To prevent this sagging, and retain dimensional stability of the strip of filler material, first supporting means may be provided which comprises a series of the freely rotatable conveyor rolls 75 rotatably mounted in close parallel relation between the trackway beams at the right-hand end of the trackway. In lieu of conveyor rolls 75, an endless conveyor belt may be utilized to support any sagging portion of the strip 25 of filler material. Release of the brake means 67 allows filler material to be drawn from the accumulator section by the section 16 as shown in Figure 9.

At the left-hand portion of the trackway frame, second supporting means comprising a similar series of conveyor rolls 75 is provided to support the filler material 25 being laid off the upper run of the dolly belt 65 when the dolly means D is moving to the right (best shown in Figure 1).

A measuring element 100 is located along the cutting, measuring and delivering section 16 and measures segments of the strip of filler material 25 corresponding in length to the circumference of the bead core that is to be mounted on a building drum. The measuring element 100 is associated with a shaft encoder means 82 (Figure 1) to direct a cutting blade 104 (Figure 10) to cut the filler material 25 to the predetermined length. The measuring element 100 includes a measuring wheel 101 (Figure 9) which is engageable with the strip of filler material 25. As the strip of filler material 25 passes beneath the wheel 101, the wheel rotates and measures the travel of the strip along its periphery. When the rotational travel of the periphery of the measuring wheel is equal to the circumference of the bead core mounted on the building drum, the measuring sheel indicates, either mechanically or electrically, to a measuring control means to disengage a clutch assembly 84 (Figure 9) of a motor 85 which is connected via linkages 86 to sprocket rolls 88 which are positively driven by a linkage 90. The control means electrically activates the cutting blade 104, as hereinafter described.

The cutting means 17 (depicted in Sec. A in Figure 1) is illustrated in Figure 10. The cutting blade 104 is slidably mounted on a track 105 supported on and perpendicular to the conveying means. Affixed to the top of the blade is a flexible cable 106 extending around, and supported by, two pulley wheels 108 and 108' which are connected to a reciprocating air cylinder assembly 109 which reciprocates the cable 106 and the blade 104 back and forth across the width of the conveying means and through the filler material 25.

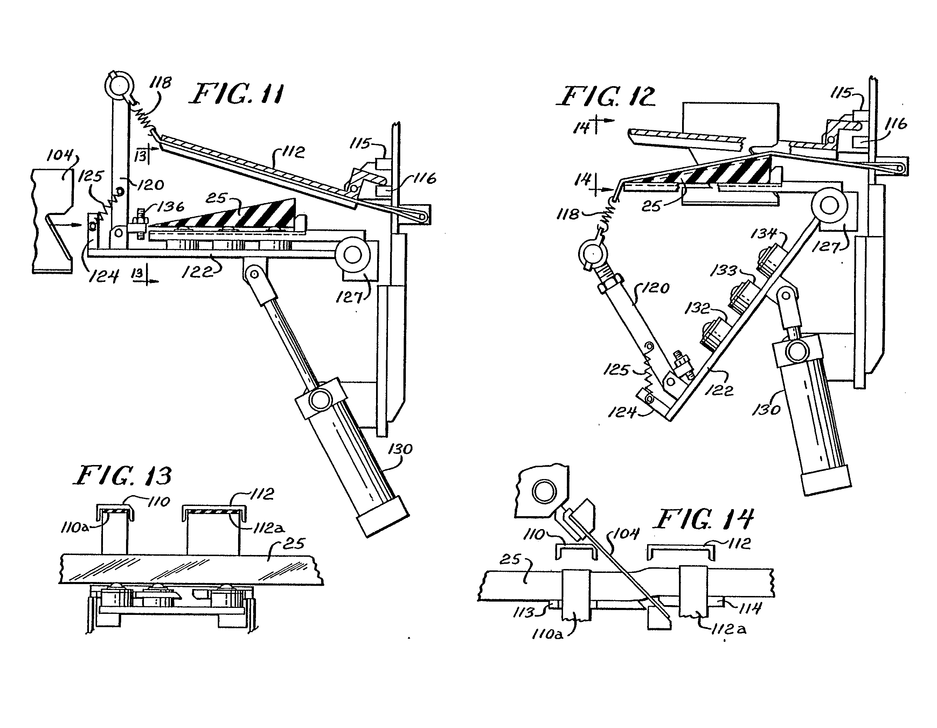

Referring now to Figures 11—14, the strip of filler material 25 is held in place during the cutting process by securing straps 110a and 112a positioned on each side of the cutting blade 104 (Figure 14). As shown in Figure 14, platforms 113 and 114 positioned below and on either side of the path of travel of the blade 104 are at different levels to introduce tension into the filler material 25 as it is clamped by the straps 110a and 112a. This reduces drag between the blade and the material and produces a cleaner cut. The straps are pulled into hollowed out stripper bars 110 and 112, thus ensuring that the filler material does not adhere to the straps. As shown in Figures 11—12, the stripper bars 110 and 112 are of generally Z-shaped appearance having a bottom section that extends substantially the width of the conveying means and a shorter post and upper section. The stripper bars 110 and 112 are pivotally mounted on the support structure at the intermediate post with the short upper portions holding the bars in place between two stops 115 and 116. The straps 110a and 112a are attached to a spring means 118 which is in turn attached to a vertical arm 120. The arm 120 extends downward below the filler material 25 and is pivotally connected to a horizontal arm 122. The horizontal arm 122 includes a post 124 which extends upwards and contains a spring means 125 attached to the vertical arm 120, which holds the vertical arm 120 in an upright position. The horizontal arm 122 is pivotally connected at the other end to a supporting structure 127. A cylinder 130 is pivotally attached to the horizontal arm 122 in its mid area.

Mounted on the horizontal arm 122 are three roller bearings 132, 133, 134 for the support of the filler material 25. The encoder means 82, through suitable electrical hardware (not shown), provides a signal which energizes a cylinder 130 to pull the horizontal arm 122 and the roller bearings mounted thereupon, downward as the blade 104 moves across the conveying area. The downward movement of the horizontal arm 122 pulls the vertical arm 120 mounted thereupon downward also. A post 136, extending outward from the vertical arm 120 towards the bottom near its pivot point with the arm 122, provides an adjustment means to control the arc of its movement. As the vertical arm 102 is pulled downward, the straps 110a and 112a are pulled downward across the strip of filler material holding it in place as the cutting blade 104 slices through. The advantage of these flexible straps is they are able to conform to the many different shapes of filler material which may be encountered. The roller bearings 132, 133 and 134 perform two separate functions: They support the material for transport through the cutting means during measurement mode, retracting during cutting so that the filler material can be clamped by the straps 110a and 112a against a rigid platform, and then ensuring that the filler material is broken loose from the rigid platforms 113 and 114 by lifting it up after cutting.

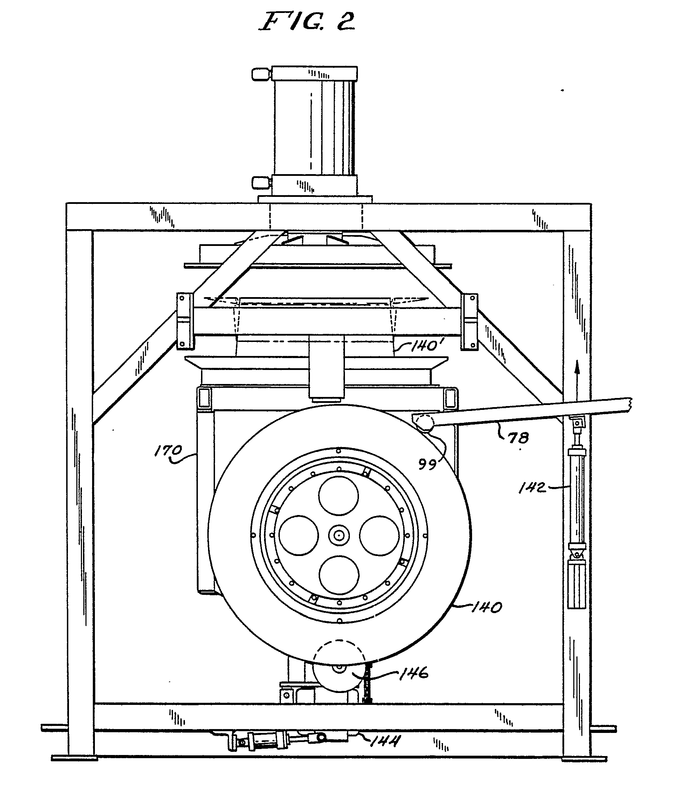

As the filler material 25 passes to the left from the conveyor rolls 75 (Figure 1) to a bead filler applicator element 19 (designated in Sec. B in Figure 1) the cut strip of filler material is supported by a series of rollers 88. The rollers 88 have sprockets thereon, mounted in an upwardly swinging feed conveyor frame 92 pivoted at 94 to the main frame 95. The outer end 97 of the pivotal conveyor frame 92 supports conveyor feed rollers 103 over which the filler material passes downwardly to its bead applying position on the building drum 140. As best seen in Figures 1, 2 and 4, a rubber drive roller 99 is rotatably mounted on the underside of the frame 92. The roller 99 is adapted to be rotated by, and when engaged with, the peripheral surface of the building drum 140. The drive roller 99 is connected by a chain 96 to the sprockets of the rollers 88 with the feed roller thereon so that the filler material will be fed to the surface of the building drum at the same linear speed of travel as the peripheral surface of the building drum 140. The bead core 32 is supported on a hub structure 141 of the building drum 140. The drum 140 includes an annular frame member 148 which is engaged by a drive wheel 146 driven by a motor 144 through a gear box 145.

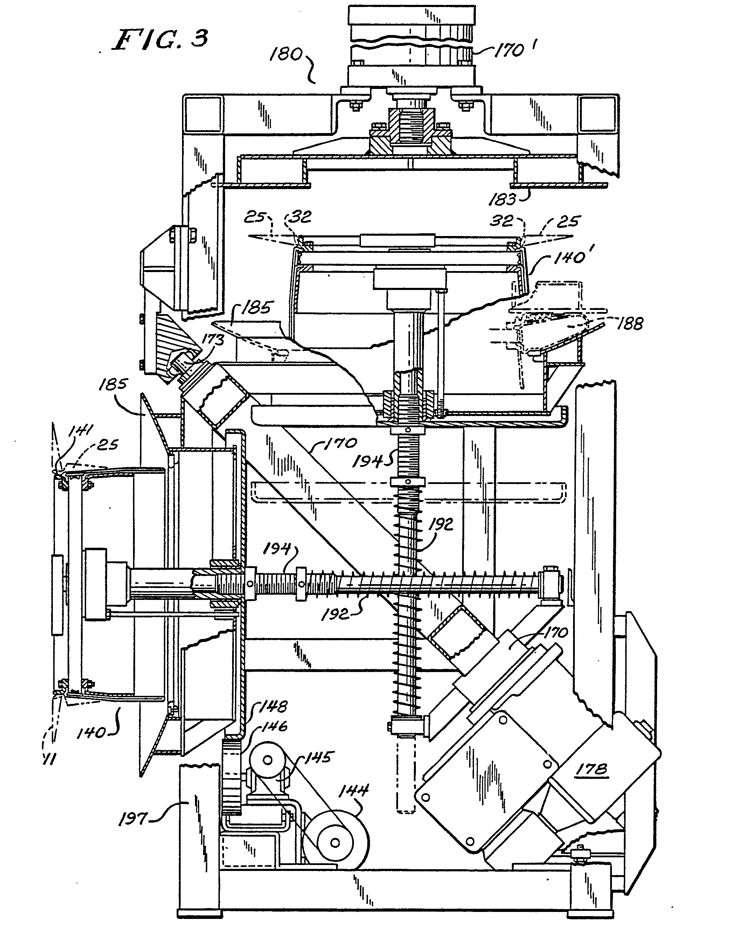

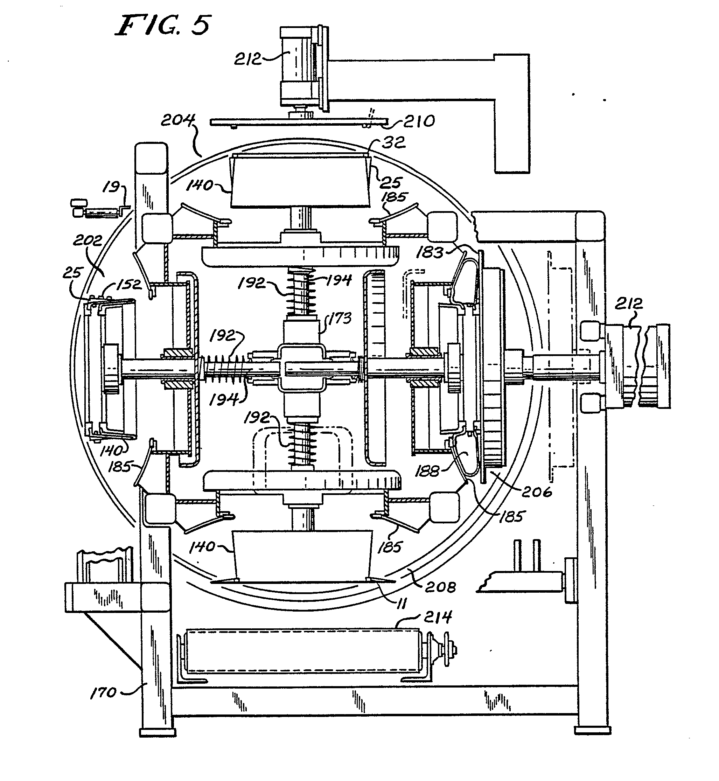

The applicator element 19, as depicted by Sec. B in Figure 1, includes means to power the conveyor or roller system, such as motor 85. The conveyor system of the applicator element 19 and the main conveyor system 107 (as described by Sec. A in Figure 1) are joined by means of a clutch assembly 84 located at the pivot 94 (Figure 9) between the applicator element and the main conveyor system. The applicator element 19 is equipped with means by which it can be raised or lowered, such as a cylinder 142, as depicted by the dotted lines in Figure 1. The conveyor system of the applicator element is powered by the motor 85 through the feed rollers 88 which are operatively linked together by a chain 90 (Figures 9 and 4). The shaft encoder 82 (Figure 1) is positioned in an intermediate position between the pivot 94 and the end of the applicator element 19. The encoder 82, through other suitable electrical hardware, controls the clutch assembly 84 and the motor 85. The encoder 82 provides signals to help control a number of operations in the filler stock application cycle. For example, the applicator element 19 is in the upward-raised position, clutch assembly 84 is engaged with the sprockets of the rollers 88 and both sections A and B (Figure 1) are driven by the motor 85. This advances the end of the cut length of filler material 25 from the blade 104 to a distance measured out by the measuring wheel 101. The motor then shuts off, stopping movement of the strip of filler material while the stock is cut by the cutting means 17. With the applicator element 19 still in the raised position, the encoder 82 provides an electrical signal which switches the clutch assembly 84 to disengage and only the sprocket rollers 88 in Sec. B are selectively driven by the motor 85. This advances the end of the filler material to a point above the drive roller 99. When the applicator element 19 is lowered onto the building drum 140 by a retracting cylinder 142, the encoder, through appropriate switches, energizes a motor 144 (Figure 3) and the building drum 140 is rotated approximately one revolution, which in turn drives the rubber drive roller 99 which powers the feed rollers 88. The filler material then wraps around the building drum as it is rotated. After about one rotation of the building drum, the applicator element 19 is moved upwardly to the raised position. This completes the cutting, measuring and delivering cycle.

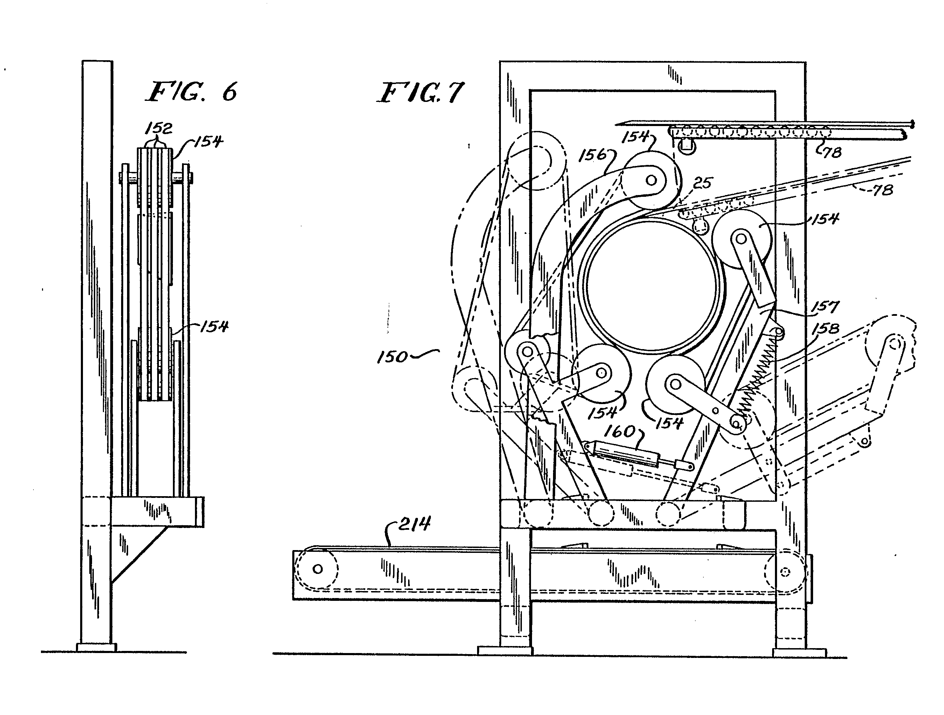

As shown in Figures 6 and 7, an automatic application mechanism 150 is provided and includes a plurality of V-belts 152 mounted on rollers 154 rotatable on pivotally mounted frame elements 156 and 157. Each engagement mechanism includes the V-belts and roller assembly which are movable from an outward-disengaging position (shown by dotted lines in Figure 7) to an inward engaging position wherein the belts 152 engage the filler material 25 and automatically apply and splice the material adjacent to the mounted bead core 32. Spring means 158 and cylinder means 160 are provided to selectively move the frame elements 156 and 157 to the outward at-rest position from the inward engaging position after each application cycle.

After the strip of filler material 25 is mounted on the building drum 140 and automatically applied thereon, it can be processed further into a fillered bead core assembly (shown at 11 in Figure 3). The present invention envisions the use of multiple work stations within the filler applicator 18.

Referring now to Figure 3, there is shown a two-station filler applicator 18. The two-station apparatus includes two building drums 140 and 140' of known construction. These building drums consist of a bladder 188 positioned radially inwardly of the filler material 25 positioned thereon and a turn-up ring 185 surrounds the building drum and is attached to a rotating frame 170. The building drums 140 and 140' are positioned at 90° angles on a pivot spindle 173. The pivot spindle 173 is mounted on a frame 170 and driven by a drive motor 178.

In operation, the applicator element 19 is moved downward to engage the drum 140 and a strip of filler material 25 is applied to the drum between the automatic application mechanism 150 and the drum. The applicator element is then raised upwardly, and the bead core 32 is positioned on the front of the drum which is then rotated to the forming position, as depicted by 180 in Figure 3. It should be noted that it is generally preferred to position the tyre bead core 32 on the drum 140 and then apply the filler material 25 onto the drum. At the forming station, a flange 183 descends to position the bead core 32 on the building drum and pushes the primary building drum 140', which is slidably mounted on a spring loaded shaft, into the turn-up ring 185, as the bladder 188 is inflated. The inflation of the bladder 188 forces the filler material 25 to extend upward and outward as it is pressed between the flange 183 and the bladder 188 supported by the turn-up ring 185. The flange 183 is then pulled upward by an air cylinder 170' and the building drum 140' is returned to the outward at-rest position, by a spring 192 on a shaft 194. During this operation, the other building drum 140 is being loaded with another band of filler material 25 and a bead core 32. These operations being completed, the pivot spindle 173 rotates the building drum 140 with the new strip to the forming work station and the building drum with the finished fillered bead core assembly to the applicator station. The finished filler bead core assembly is then removed from the drum 140 and a new strip of filler material can be deposited on the drum. This completes the cycle of operation.

Figure 5 illustrates an alternative embodiment of filler applicator with four stations. Four building drums 140 are mounted in a plane on spring loaded shafts 194. The building drums 140 and turn-up rings 185 and spring loaded shafts 194 are mounted on a rotatable pivot 173 within a frame. At the first application station, designated 202, filler material 25 is automatically placed upon the building drum 140. That drum then rotates to station 2, designated 204, as the building drum that was in removal station No. 4, designated 208, moves up into the loading position. At staton No. 2, the wire bundle which makes the bead core is automatically positioned on the primary drum by a positioning plate 210 which descends by means of an air cylinder 212. After the bead core has been positioned, the positioning plate 210 is returned outwardly and the drum 140 is then rotated to station 3, designated 206. At station 3, a flange 183 forces the spring-loaded drum inwardly into a turnup ring 185 as the bladder 188 is inflated, forcing the filler material into an outwardly extended position. After the flange 183 is returned by an air cylinder 212 and the building drum 140 returns to its at-rest position, the building drum is then rotated to station 4, designated at 208. At station 4, the completed fillered bead core assembly 11 is pushed off the primary building drum 140 onto a conveyor 214 for further processing into a completed tyre. It is also contemplated within the scope of the present invention that the rotation of the fillered material to engage the bead core is not limited to a planar configuration of fillered bead core assembly. The building drum 140 can then be rotated to station 1 thereby completing the cycle. The use of a four-station filler applicator increases the rate at which fillered bead core assemblies can be completed.

While the preferred embodiment of the invention has been illustrated, it is to be understood that this is capable of variation and modification within the scope of the following claims.

**Claims**

1. A continuously operating machine for forming fillered bead core assemblies (11), each consisting of a bead core (32) and an endless length of elastomeric filler material (25) supported on said bead core, which machine comprises a filler applicator (18) which includes a support (140) on which the filler material (25) can be disposed as an endless length in substantially cylindrical form, a region (141) adjacent said support to receive the bead core (32) and means (183, 185, 188) to turn the endless length of filler material about the bead core (32) towards a radial plane of the latter to form a fillered bead core assembly (11), characterised in that said filler applicator (18) is disposed downstream of an extruding section (12), where filler material is extruded and a cutting, measuring and delivering section (16) where a selected length of freshly extruded filler material (25) sufficient for forming said endless length on said support (140) is cut off from the output of the extruding section (12).

2. A machine as claimed in claim 1, characterised in that intermediate said extruding section (12) and said cutting, measuring and delivering section (16) there is disposed an accumulator section (14) to accommodate freshly extruded filler material between cuts in the cutting, measuring and delivering section (16).

3. A machine as claimed in either preceding claim, characterised in that the means (19) for disposing said filler material (25) on said support (140) includes a plurality of belt means (152) engageable with said filler material at said applicator (18).

4. A machine as claimed in any preceding claim, characterised in that a cutting means (17) is provided in the cutting, measuring and delivering section (16), which cutting means includes a knife (104) which engages the freshly extruded filler material (25) while the latter is retained by clamp means (110a, 112a).

5. A machine as claimed in claim 4, characterised in that the knife is a cutting blade (104) and the clamp means is defined by flexible straps (110a, 112a) pulled downward across the freshly extruded filler material (25) and positioned on each side of the cutting blade (104).

6. A machine as claimed in any preceding claim, characterised in that said freshly extruded filler material (25) is fed to the support (140), while the latter rotates by feeding means which includes a conveyor means (99, 96, 90, 88) positively driven by the support (140) to match the linear speeds of travel of the filler material (25) and the support (140) and thereby prevent distortion of the freshly extruded filler material (25) during positioning in substantially cylindrically form adjacent the bead core (32).

7. A machine as claimed in any preceding claim, characterised in that said applicator (18) comprises a multiple work station mechanism having at least four work stations (202, 204, 206, 208), a first work station (202) adapted to receive freshly extruded filler material (25) thereon, a second work station (204) adapted to position the bead core (32) adjacent the filler material (25), a third work station (206) for forming and rotating the filler material (25) onto the bead core (32) and a fourth station (208) for removal of the completed fillered bead core assembly (11).

8. A method of manufacturing a fillered bead core assembly (11) comprising an annular bead core (32) and an endless length of extruded elastomeric filler material (25) supported on the bead core (32), including the steps of cutting filler material (25) into predetermined lengths, locating a cut length of filler material (25) in cylindrical form adjacent to a bead core (32) with the filler material (25) radially outwardly of an inflatable bag (188) forming part of a drum means (140), and forming the fillered bead core assembly (11) by inflating said bag to rotate the filler material (25) about the bead core (32), characterised in that heated freshly-extruded filler material (25) is continuously fed to the upstream end of a conveying means (28, 39, 14, 16) whose downstream end (99) is adjacent to the drum means (140) and includes a cutting and measuring means (16), measured lengths of freshly extruded filler material (25) being cut off and applied to said drum means (14) for forming the endless length thereon.

9. A method as claimed in claim 8, characterised in that the conveying means includes an accumulator section (14) upstream of the cutting and measuring means (16), and in that the linear speed of advance of the freshly extruded filler material (25) at the downstream end of the conveyor means (99) matches the linear speed of the drum means (140) when the filler material (25) is being wrapped therearound.

10. A method of manufacturing a fillered bead core assembly according to claim 9, characterised in that each cut length of freshly extruded filler material (25) is applied to the rotating drum means (140) by endless belts (152) which engage the filler material and automatically splice the filler material (25) adjacent to the mounted bead core (32).

**Revendications**

1. Une machine à fonctionnement continu pour former des ensembles (11) de tringles de talon munies de pièces de remplissage, chacun de ces ensembles se composant d'une tringle de talon (32) et d'une pièce allongée sans fin (25) en matériau élastomère de remplissage porté par la dite tringle de talon, machine qui comprend un applicateur (18) du matériau de remplissage, comportant un support (140) sur lequel le matériau de remplissage (25) peut être déposé sous la forme d'une pièce sans fin de forme sensiblement cylindrique, une portée (141) voisine du dit support pour recevoir la tringle de talon (32) et des moyens (183, 185, 188) pour faire tourner la pièce allongée sans fin en matériau de remplissage autour de la tringle de talon (32) en direction d'un plan radial de cette dernière afin de former un ensemble (11) de tringle de talon munie d'une pièce de remplissage, caractérisée en ce que le dit applicateur (18) de matériau de remplissage est disposé en aval d'une section d'extrusion (12) dans laquelle le matériau de remplissage est extrudé, d'une section (16) de coupe, de mesure et de fourniture dans laquelle une longueur choisie de matériau de remplissage (25) fraîchement extrudé, suffisante pour former la dite pièce sans fin sur le dit support (140), est prélevée dans le matériau provenant de la seciton d'extrusion (12).

2. Une machine suivant la revendication 1, caractérisée en ce qu'entre la dite section d'extrusion (12) et la dite section (16) de coupe, de mesure et de fourniture, est disposée une section d'accumulation (14) destinée à recueillir le matériau de remplissage fraîchement extrudé, entre les coupes pratiquées dans la section (16) de coupe, de mesure et de fourniture.

3. Une machine suivant l'une ou l'autre des revendications précédentes, caractérisée en ce que les moyens (19) pour déposer le dit matériau de remplissage (25) sur le dit support (140) comprennent une pluralité de courroies (152) pouvant engager le dit matériau de remplissage sur le dit applicateur (18).

4. Une machine suivant l'une ou l'autre des revendications précédentes, caractérisée en ce qu'il est prévu, dans la section (16) de coupe, de mesure et de fourniture, des moyens de coupe (17) qui comprennent un couteau (104) qui s'engage dans le matériau de remplissage (25) fraîchement extrudé alors que ce dernier est retenu par des moyens de serrage (110a, 112a).

5. Une machine suivant la revendication 4, caractérisée en ce que le couteau est une lame de coupe (104) et que les moyens de serrage sont définis par des sangles flexibles (110a, 112a), tirées vers le bas transversalement au matériau de remplissage (25) fraîchement extrudé et disposées de part et d'autre de la lame de coupe (104).

6. Une machine suivant l'une ou l'autre des revendications précédentes, caractérisée en ce que le matériau de remplissage (25) fraîchement extrudé est fourni au support (140), pendant que ce dernier est en rotation, par des moyens d'alimentation qui comprennent des moyens de transport (99, 96, 90, 88) entraînés positivement par le support (140) pour faire correspondre les vitesses linéaires de déplacement du matériau de remplissage (25) et du support (140) et prévenir ainsi toute distorsion du matériau de remplissage (25) fraîchement extrudé durant sa mise en place, sous forme sensiblement cylindrique au voisinage de la tringle de talon (32).

· 7. Une machine suivant l'une ou l'autre des revendications précédentes, caractérisée en ce que le dit applicateur (18) comprend un mécanisme à plusieurs postes de travail comportant au moins quatre postes de travail (202, 204, 206, 208), un premier poste de travail (202) agencé pour recevoir le matériau de remplissage (25) fraîchement extrudé, un second poste de travail (204) agencé pour disposer la tringle de talon (32) au voisinage du matériau de remplissage (25), un troisième poste de travail (206) destiné à former et à déposer, en rotation, le matériau de remplissage (25) sur la tringle de talon (32) et un quatrième poste de travail (208) destiné à enlever l'ensemble terminé (11) comprenant la tringle de talon munie de la pièce de remplissage.

8. Un procédé pour fabriquer un ensemble (11) de tringle de talon munie d'une pièce de remplissage composé d'une tringle de talon (32) annulaire et d'une pièce sans fin en un matériau élastomère de remplissage (25) extrudé déposé sur la tringle de talon (32), comprenant les étapes consistant à couper le matériau de remplissage (25) en longueurs prédéterminées, à disposer une longueur coupée de matériau de remplissage (25) en forme cylindrique au voisinage d'une tringle de talon (32) avec le matériau de remplissage (25) placé, radialement, vers l'extérieur d'un coussin gonflable (188) faisant partie d'un tambour (140), et à former l'ensemble (11) de tringle de talon munie d'une pièce de remplissage en gonflant le dit coussin afin de faire tourner le matériau de remplissage (25) autour de la tringle de talon (32), caractérisé en ce que le matériau de remplissage (25) fraîchement extrudé, chauffé, est déposé en continu à l'extrémité amont des moyens de transport (28, 39, 14, 16) dont l'extrémité aval (99) est voisine du tambour (140) et comporte des moyens de coupe et de mesure (16), des longueurs mesurées de matériau de remplissage (25) fraîchement extrudé étant coupées et appliquées au tambour (140) de façon à former sur celui-ci la dite pièce sans fin.

9. Un procédé suivant la revendication 8, caractérisé en ce que les moyens de transport comprennent une section d'accumulation (14) disposée en amont des moyens de coupe et de mesure (16), et en ce qu'à l'extrémité aval (99) des moyens de transport, la vitesse linéaire de déplacement du matériau de remplissage (25) fraîchement extrudé correspond à la vitesse linéaire du tambour (140) lorsque le matériau de remplissage (25) est enroulé sur celui-ci.

10. Un procédé de fabrication d'un ensemble de tringle de talon munie d'une pièce de remplissage, suivant la revendication 9, caractérisé en ce que chaque longueur coupée de matériau de remplissage (25) fraîchement extrudé est appliquée au tambour (140) en rotation, au moyen de courroies sans fin (152) qui s'engagent dans le matériau de remplissage et soudent automatiquement le matériau de remplissage (25) sur la tringle de talon (32) mise en place.

**Patentansprüche**

1. Kontinuierlich arbeitende Maschine für das Formen von gefüllten Wulstkernanordnungen (11), die jeweils aus einem Wulstkern (32) und einem endlosen Stück elastomerem Füllstoff (25) bestehen, der durch besagten Wulstkern gestützt wird, welche Maschine einen Füllstoff-Auftrageapparat (18) mit einer Auflage (140) beinhaltet, auf welcher der Füllstoff (25) als endloses Stück in nahezu zylindrischer Form ausgelegt werden kann, sowie einen neben besagter Auflage liegenden Bereich (141) für die Aufnahme des Wulstkerns (32) und Mittel (183, 185, 188) für das Winden des endlosen Stücks Füllstoff, um den Wulstkern (32) in radialer Richtung zum letzteren um einen gefüllten Wulstkern (11) zu formen, dadurch gekennzeichnet, daß besagter Füllstoff-Auftrageapparat (18) stromabwärts von einem Extruder (12) angeordnet ist, wo der Füllstoff extrudiert wird, sowie einer Trenn-, Dosier- und Zuführeinrichtung (16), in welcher der frisch extrudierte Füllstoff (25) aus dem Extruder (12) richtig abgetrennt wird, um besagtes endloses Stück auf der Auflage (140) zu formen.

2. Maschine nach Anspruch 1, dadurch gekennzeichnet, daß zwischen besagtem Extruder (12) und besagter Trenn-, Dosier- und Zuführeinrichtung (16) ein Speicherabschnitt (14) angeordnet ist, um den frisch extrudierten Füllstoff zwischen den Trennschnitten der Trenn-, Dosier- und Zuführeinrichtung (16) aufzunehmen.

3. Maschine nach einem der vorhergehenden Ansprüche, dadurch gekennzeichnet, daß die Mittel (19) für das Auslegen des besagten Füllstoffs (25) auf besagter Auflage (140) eine Mehrzahl von Riemen (152) beinhalten, die mit dem besagten Füllstoff an besagtem Auftrageapparat (18) eingerückt werden können.

4. Maschine nach einem der vorhergehenden
Ansprüche, dadurch gekennzeichnet, daß eine
Trennvorrichtung (17) in besagter Trenn-, Dosier-
und Zuführeinrichtung (16) vorgesehen ist, welche Trennvorrichtung ein Messer (104) beinhaltet,
welches in den frisch extrudierten Füllstoff (25)
eingreift, während dieser in einer Spanneinrichtung festgehalten wird (110a, 112a).

5. Maschine nach Anspruch 4, dadurch gekennzeichnet, daß das Messer ein Trennblatt (104) ist
und die Spanneinrichtung aus elastischen Riemen (110a, 112a) besteht, die nach unten über
den frisch extrudierten Füllstoff (25) gezogen und
auf beiden Seiten des Messers (104) angeordnet
sind.

6. Maschine nach einem der vorhergehenden
Ansprüche, dadurch gekennzeichnet, daß der
frisch extrudierte Füllstoff (25) der Auflage (140)
zugeführt wird, während diese rotiert, wobei die
Zuführmittel Förderer (99, 96, 90, 88) beinhalten,
die durch die Auflage (140) getrieben werden, um
sie der Lineargeschwindigkeit des Füllstoffs (25)
und der Auflage (140) anzupassen und auf diese
Weise Verziehungen des frisch extrudierten Füllstoffs (25) während des Positionierens in nahezu
zylindrischer Form neben dem Wulstkern (32) zu
vermeiden.

7. Maschine nach einem der vorhergehenden
Ansprüche, dadurch gekennzeichnet, das der Auftrageapparat (18) aus einem Transfersystem mit
mindestens vier Arbeitsstationen (202, 204, 206,
208) besteht, wobei die erste Arbeitsstation (202)
für die Aufnahme von frisch extrudiertem Füllstoff (25), die zweite Arbeitsstation (204) für das
Positionieren des Wulstkerns (32) neben dem
Füllstoff (25), die dritte Arbeitsstation für das
Formen und Rotieren des Füllstoffs (25) auf dem
Wulstkern (32) und die vierte Arbeitsstation (208)
für die Abfuhr der fertig gefüllten Wulstkernanordnung (11) ausgelegt sind.

8. Fertigungsmethode für eine gefüllte
Wulstkernanordnung (11), bestehend aus einem
ringförmigen Wulstkern (32) und einem endlosen
Stück extrudiertem elastomerem, auf dem Wulstkern (32) gestüztem Füllstoff (25), mit den Schritten: Trennen des Füllstoffs (25) in vorbestimmte
Längen, Legen einer abgeschnittenen Länge Füllstoff (25) in zylindrischer Form neben einem
Wulstkern (32) mit dem Füllstoff (25) radial auswärts von einem aufblasbaren Balg (188) der
einen Teil einer Trommel (140) bildet, und Formen der gefüllten Wulstkernanordnung (11)
durch Aufblasen des besagten Balgs und Rotieren
des Füllstoffs (25) um den Wulstkern (32), dadurch gekennzeichnet, daß erhitzter, frisch extrudierter Füllstoff (25) kontinuierlich dem stromaufwärts gelegenen Ende eines Förderers (28, 39, 14,
16) zugeführt wird, dessen stromabwärts gelegenes Ende (99) neben der Trommel (140) angeordnet ist und eine Trenn- und Dosier- einheit (16)
beinhaltet, wobei gemessene Längen des frisch
extrudierten Füllstoffs (25) abgetrennt und auf die
Trommel (14) für das Formen des endlosen
Stücks aufgetragen werden.

9. Methode nach Anspruch 8, dadurch gekennzeichnet, daß der Förderer einen Speicherabschnitt (14) beinhaltet, der stromaufwärts von
der Trenn- und Dosiereinrichtung (16) angeordnet
ist, und daß die lineare Fördergeschwindigkeit
des frisch extrudierten Füllstoffs (25) am stromabwärts gelegenen Ende des Förderers (99) der
Lineargeschwindigkeit der Trommel (140) beim
Winden des Füllstoffs (25) angepaßt ist.

10. Fertigungsmethode für gefüllte Wulstkerne
nach Anspruch 9, dadurch gekennzeichnet, daß je
eine abgetrennte Länge des frisch extrudierten
Füllstoffs (25) auf die rotierende Trommel (140)
durch endlose Riemen (152) aufgetragen wird,
welche den Füllstoff erfassen und den Füllstoff
(25) automatisch neben dem montierten Wulst-
kern (32) verspleißen.

*FIG. 1*

*FIG. 4*

# FIG. 2

140'

78

99

170

142

140

146

144

FIG. 3

0 062 497

3

FIG. 5

0 062 497

4

F/G. 6

F/G.7

0 062 497

FIG. 9

FIG. 8

0 062 497

FIG. 10

FIG. 11

FIG. 12

FIG. 13

FIG. 14

0 062 497